# EUROPÄISCHE PATENTANMELDUNG

(11) **EP 4 764 266 A1**
(43) Veröffentlichungstag der Anmeldung: **24.06.2026**
(21) Anmeldenummer: 25224482.7
(22) Anmeldetag: 17.12.2025
(51) Int. Cl.: F16J 15/08, F16L 19/02, F16L 23/20

(54) **WEICHMETALL-RINGDICHTUNG UND FLANSCHVERBINDUNG**

(30) Priorität: 20.12.2024 DE 102024139484
(71) Anmelder: ISOflanges GmbH, 29308 Winsen (DE)
(72) Erfinder: Rathmann, Steffen, 29308 Winsen (DE)
(74) Vertreter: Gerstein, Hans Joachim

(57) **Zusammenfassung**

Es wird eine Weichmetall-Ringdichtung (5) für Flanschverbindungen (1) mit einer aus einem metallischen Material gebildeten Ringscheibe beschrieben, die eine zentrale Ausnehmung (6) hat. Ein radial äußerer Kraftschlussbereich (7) der Ringscheibe ist verdichtet und ein diesbezüglich radial weiter innen liegender Dichtbereich (8) der Ringscheibe weist mindestens einen über den Umfang verlaufenden Steg (11a, **11b,** 11c) mit einer geringeren Härte als der verdichtete Kraftschlussbereich (7, 12) auf.

Bei einer Flanschverbindung (1) zur Verbindung von zwei aneinander angrenzenden Rohren, die an ihren Rohrenden jeweils mit einem Anschlussflansch (2a, 2b) verbindbar sind, wird zwischen den planparallel aneinander angrenzenden Anschlussflanschen (2a, 2b) eine solche Weichmetall-Ringdichtung (5) angeordnet. Die Anschlussflansche (2a, 2b) sind miteinander verschraubbar und die zwischen den Anschlussflanschen (2a, 2b) liegende Weichmetall-Ringdichtung (5) ist dabei im Krafthauptschluss verpressbar.

## Beschreibung

Die Erfindung betrifft eine Weichmetall-Ringdichtung für Flanschverbindungen mit einer aus einem metallischen Material, insbesondere einem Weichmetall, gebildeten Ringscheibe, die eine zentrale Ausnehmung hat. Die Erfindung betrifft weiterhin eine Flanschverbindung mit zwei aneinander angrenzenden Rohren, die an ihren Rohrenden jeweils einen Anschlussflansch aufweisen.

Es ist bekannt, die Abdichtung zwischen Rohr-Anschlussflanschen durch zwischenliegende Ringdichtungen vorzunehmen.

Aufgabe der vorliegenden Erfindung ist es, eine ausschließlich metallisch dichtende Weichmetall-Ringdichtung zu schaffen, die für Flanschverbindungen mit einer flachen Dichtleiste eine zuverlässige Abdichtung sicherstellt.

Die Aufgabe wird durch die Weichmetall-Ringdichtung mit den Merkmalen des Anspruchs 1 und die Flanschverbindung mit den Merkmalen des Anspruchs 11 gelöst. Vorteilhafte Ausführungsformen sind in den Unteransprüchen beschrieben.

Es wird vorgeschlagen, dass ein radial äußerer Kraftschlussbereich der Ringscheibe verdichtet ist und ein diesbezüglich radial weiter innen liegender Dichtbereich der Ringscheibe mindestens einen über den Umfang verlaufenden Steg mit einer geringeren Härte als der verdichtete Kraftschlussbereich aufweist. Der Dichtbereich kann z.B. nicht verdichtet sein, so dass der im Dichtbereich ausgeformte über den Umfang verlaufende Steg die Ausgangshärte des Rohmaterials behält. Es ist auch möglich, dass der Dichtbereich weniger stark verdichtet ist als der radial äußere Kraftschlussbereich. Das Verdichten des Materials im radial äußeren Kraftschlussbereich und ggf. anderen Bereich kann durch Aufbringen einer Presskraft erfolgen, z.B. im Rahmen eines Umformvorgangs.

Die Weichmetall-Ringdichtung ist perfekt gegen externen Brand und für hohe Temperaturen geeignet. Vorteilhaft ist außerdem, dass die Weichmetall-Ringdichtung keinerlei Fließverhalten aufweist. Die Weichmetall-Ringdichtung ist beispielsweise für den Hochdruck-, Mitteldruck- und Niederdruckbereich in der Energieversorgung geeignet, insbesondere zur Abdichtung von Erdgas oder Wasserstoff führenden Rohrleitungs-Flanschverbindungen. Allgemein ist die Dichtung für beliebige gasförmige und/oder flüssige Medien geeignet. Die Dichtung ist besonders für Gase wie Wasserstoff oder Erdgas geeignet, weil kein Fließverhalten eintritt und eine besonders geringe Leckagerate sichergestellt wird.

Mit der Weichmetall-Ringdichtung werden die Vorteile einer Ring-Joint-Dichtung auf eine Flanschverbindung mit flacher Dichtleiste übertragen. Die Dichtung dichtet metallisch ab, z.B. bei einer maximalen Härte von vorzugsweise 90HB (Brinell-Härte) im Dichtbereich. Durch den verdichteten, z.B. festgewalzten Kraftschlussbereich bekommt die Weichmetall-Ringdichtung die Stabilität, die sie benötigt, damit es kein Fließverhalten gibt und die Weichmetall-Ringdichtung ihre Form behält.

Die Weichmetall-Ringdichtung hat eine sehr niedrige Leckagerate, wodurch sie besonders bei dem Einsatz von Wasserstoff geeignet ist, weil dieser Aufgrund der Molekülgröße besonders zu Leckagen neigt.

Die Weichmetall-Ringdichtung lässt sich nach einer Montage rückstandslos aus einer Flanschverbindung entnehmen, sodass eine Neumontage ohne Reinigungsarbeiten erfolgen kann. Die Weichmetall-Ringdichtung kann insgesamt aus einem einzigen Material gefertigt sein, also keine Mischung aus unterschiedlichen Materialien sein, wodurch das Recycling vereinfacht wird.

Zusätzlich ist die Lagerung der Weichmetall-Ringdichtung sehr gut, weil es keinen Alterungsprozess gibt, wie bei Dichtungen mit Gummibestanteilen.

Bei der Montage ist das Risiko einer Fehlerquelle durch das Montagepersonal besonders gering.

Durch die Auswahl des Weichmetalls, welches sehr widerstandsfähig gegenüber leichten Beschädigungen ist, ist auch das Risiko von Transportschäden minimal.

Weiterhin ist die Berechnung des vorgeschriebenen Drehmomentes sehr einfach, weil es kein Fließverhalten gibt, die Weichmetall-Ringdichtung nur aus einem Material besteht und somit die Berechnung nur auf das Flanschmaterial und auf den Schraubenwerkstoff ausgelegt werden muss.

Zusammengefasst sind die Vorteile der Weichmetall-Ringdichtung:
- Keinerlei Fließverhalten
- Montagesicherheit
- Für unterschiedlichste Medien geeignet
- Rückstandsloses Tauschen der Dichtung möglich
- Sicherheit gegen Transportschäden
- geringste Leckage-Rate
- sicher gegen externen Brand
- Chemikalien-beständig.

Der Kraftschlussbereich der Ringscheibe kann zusätzlich zu dem radial äußeren Kraftschlussbereich einen radial inneren Kraftschlussbereich aufweisen, der ebenfalls verdichtet ist, während der Dichtbereich nicht verdichtet ist und die im Dichtbereich ausgeformte mindestens eine umlaufende Erhebung (Steg) die Ausgangshärte des Rohmaterials behält. Dabei ist der Dichtbereich der Ringscheibe zwischen dem radial äußeren Kraftschlussbereich und dem radial inneren Kraftschlussbereich der Ringscheibe angeordnet.

Es können mehrere radial voneinander beabstandete Stege im Dichtbereich angeordnet sein. Es kann auch nur ein Steg vorhanden sein.

Es kann ein Zwischenraum zwischen den voneinander beabstandeten Stegen vorhanden sein. Die Stege können auch ohne Zwischenraum angeordnet sein.

Ein erster, radial weiter außen liegender Zwischenraum zwischen voneinander beabstandeten Stegen kann kleiner als ein zweiter, radial weiter innen liegender Zwischenraum zwischen voneinander beabstandeten Stegen sein.

Der mindestens eine Steg des Dichtbereiches kann aus Weichmetall der Ringdichtung aus dem Kraftschlussbereich mit gebildet sein. Dabei kann bei der Verdichtung des Kraftschlussbereiches ein Materialaufschub des Weichmaterials im Dichtbereich bewirkt werden, um den mindestens einen Steg zu bilden.

Die Stege des Dichtbereichs können durch Materialaufschub aus dem Zwischenraum zwischen den Stegen gebildet sein.

Der mindestens eine Steg des Dichtbereichs kann gegenüber der Ebene des verdichteten Kraftschlussbereichs abragen. Beispielsweise können der oder die Stege des Dichtbereichs mindestens 0,3 mm höher als die Ebene des verdichteten Kraftschlussbereichs sein.

Es können beidseits der Ringdichtung mindestens ein über den Umfang verlaufender Steg eines jeweiligen Dichtbereichs von der Ebene des Kraftschlussbereiches abragen. Damit wird eine im Dichtbereich verformbare Dichtung von zwei aufeinander zuweisenden Dichtflächen eines Anschlussflansches bereitgestellt.

Die Stege des Dichtbereiches können eine maximale Härte von 90 HB aufweisen und der Kraftschlussbereich eine größere Härte von mehr als 90 HB haben. Damit wird eine langzeitstabile und zuverlässige Abdichtung bei der Verpressung der Weichmetall-Ringdichtung im Krafthauptschluss zwischen Anschlussflanschen sichergestellt.

Die Ringscheibe kann aus einer Weicheisenlegierung gebildet sein, die eine geringere Härte als Stahl aufweist. Denkbar sind aber auch andere Weichmetalle, wie Edelstahl, Kupferlegierungen, Aluminiumlegierungen, Bleilegierungen, Zinklegierungen, Zinnlegierungen und dergleichen. Die Ringscheibe kann aus einer Materialverbindung/Legierung gebildet sein, bei der zwei Materialien mit einander verbunden werden. Die Ringscheibe kann z.B. mittels eines additiven Herstellverfahrens (3D-Druck) hergestellt werden.

Bei einer Flanschverbindung mit zwei aneinander angrenzenden Rohren, die an ihren Rohrenden jeweils einen Anschlussflansch aufweisen, ist zwischen den planparallel aneinander angrenzenden Anschlussflanschen eine oben beschriebene Weichmetall-Ringdichtung angeordnet. Die Anschlussflansche sind miteinander verschraubbar und die zwischen den Anschlussflanschen liegende Weichmetall-Ringdichtung ist dabei im Krafthauptschluss verpressbar.

Die Erfindung wird nachfolgend anhand eines Ausführungsbeispiels mit den beigefügten Zeichnungen näher erläutert. Es zeigen:
- Fig. 1 -: Skizze eines Ausschnitts einer Flanschverbindung mit Anschlussflanschen und zwischenliegender Weichmetall-Ringdichtung;
- Fig. 2 -: Skizze einer Draufsicht auf die Weichmetall-Ringdichtung;
- Fig. 3 -: Seiten-Schnittansicht der Weichmetall-Ringdichtung aus Figur 2;
- Fig. 4 -: Skizze von Unebenheiten der mit zwischenliegender Weichmetall-Ringdichtung aufeinander liegenden Flanschoberflächen.

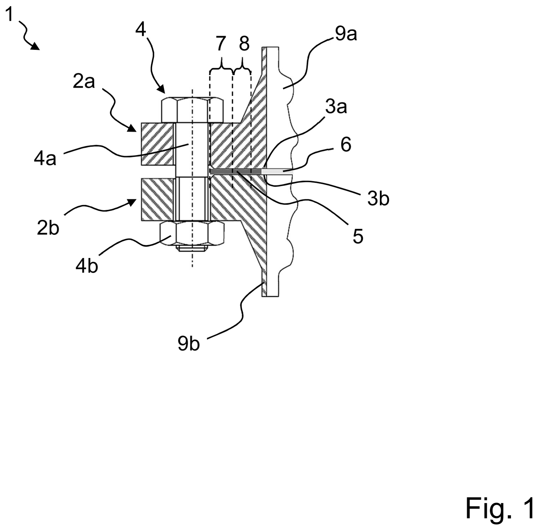

Figur 1 zeigt eine Skizze eines Ausschnitts einer Flanschverbindung 1 mit Anschlussflanschen 2a, 2b und einer zwischen Dichtflächen 3a, 3b der miteinander über Bolzenverbindungen 4 verschraubter Anschlussflanschen 2a, 2b liegender Weichmetall-Ringdichtung 5. Die Bolzenverbindung 4 hat Bolzen 4a, die als Gewindeschrauben ausgeführt sein können und mit Muttern 4b verspannt werden.

Die Weichmetall-Ringdichtung 5 ist als Scheibe mit zentraler, bspw. koaxialer Ausnehmung 6 im Bereich des Rohrdurchlasses ausgeführt. In einem radial äußeren Kraftschlussbereich 7, der an die Bolzen 4 angrenzt, ist die aus Weichmetall ausgeführt Scheibe verdichtet und im Krafthauptschluss mit den Anschlussflanschen 2a, 2b verpresst. In einem neben dem radial äußeren Kraftschlussbereich 7 liegenden radial inneren Dichtungsbereich 8 erfolgt im Wesentlichen die Abdichtung unter Ausnutzung der Verformung von Stegen des Weichmetalls. Dabei wird ausgenutzt, dass der Kraftschlussbereich 7 durch Verdichtung des Weichmetalls eine größere Härte hat, als der Dichtungsbereich mit den daran integral aus dem Weichmaterial ausgeformten mindestens einen umlaufenden Steg.

Die Kontur der Scheibe kann an die Form der Anschlussflansche 2a, 2b angepasst sein. Sie ist in der Regel kreisförmig, kann aber auch eine eckige Kontur (rechteckig, mehreckig) oder eine andere Kontur haben.

Die Anschlussflansche 2a, 2b haben einen rohrförmigen hohlen Innenraum und sind an ihren Anschlussbereichen 9a, 9b, welche an die scheibenförmigen Flansche, welche die Dichtflächen 3a, 3b aufweisen, angeformt sind, zur Verbindung von Rohrenden ausgebildet. Die Rohrenden können in den hohlen Innenraum eingesteckt oder auf die rohrförmig auslaufenden Enden der Anschlussflansche 2a, 2b aufgesteckt werden. Die Verbindung der Rohrenden mit den Anschlussflanschen 2a, 2b kann stoffschlüssig, z.B. durch Verschweißen oder Verlöten, erfolgen.

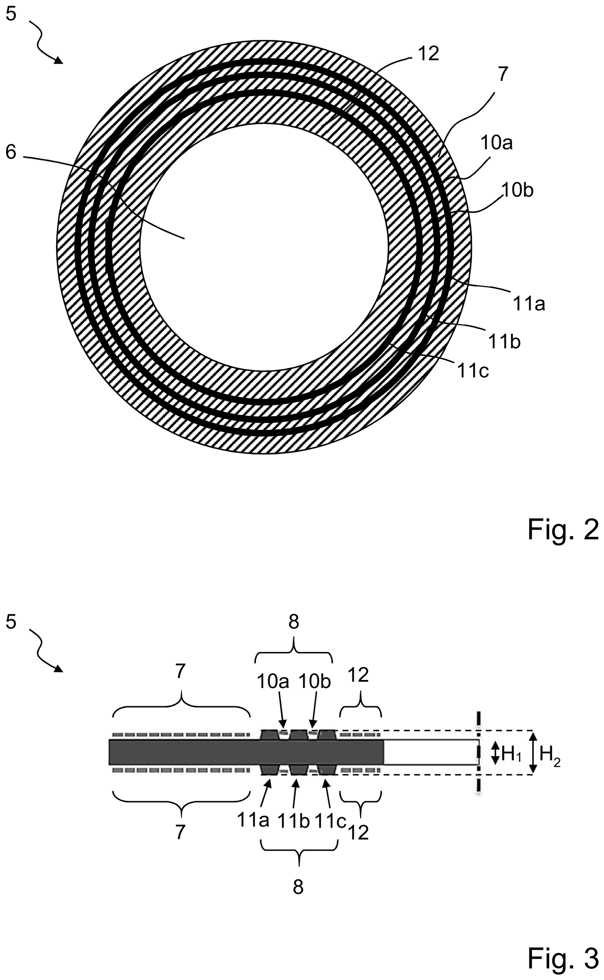

Figur 2 zeigt eine Skizze einer Draufsicht auf die Weichmetall-Ringdichtung 5. Diese ist in dem Ausführungsbeispiel als kreisförmige Scheibe mit einer konzentrischen Ausnehmung 6 im Zentrum ausgebildet.

Der radial äußere Kraftschlussbereich 7, welcher in die radial äußere Randkante übergeht, ist verdichtet und hat eine Härte, die deutlich größer als 90 HB (Brinell-Härte) ist. Die Härte sollte möglichst größer als 120 HB und bevorzugt mehr als 150 HB betragen.

An den radial äußeren Kraftschlussbereich 7 schließt sich der diesbezüglich radial weiter innen liegende Dichtbereich 8 an. Dieser hat durch jeweils einen Zwischenraum 10a, 10b voneinander beabstandete Stege 11a, 11b, 11c, die umlaufend geschlossen sind, d.h. in dem Beispiel kreisförmig. Die Stege 11a, 11b, 11c haben eine Härte, die geringer als die Härte des verdichteten Kraftschlussbereiches 7 ist. Vorzugsweise liegt die maximale Härte bei 90 HB bzw. bei dem Härtegrad des Ausgangsmaterials, d.h. der Härte, die das Weichmetall im Rohzustand aufweist.

Die Breite der Zwischenräume 10a, 10b können unterschiedlich voneinander sein, so ist denkbar, dass die radial weiter außen liegenden Zwischenräume 10a schmaler sein, als die radial weiter innen liegenden Zwischenräume 10b zwischen jeweils zwei benachbarten Stegen 11a, 11b bzw. 11b, 11c.

Angrenzend an die Ausnehmung 6 kann optional ein radial innerer Kraftschlussbereich 12 vorgesehen sein, der ebenfalls wie der äußere radiale Kraftschlussbereich 7 verdichtet ist und damit eine größere Härte als das Rohmaterial aufweist.

Figur 3 zeigt eine Seiten-Schnittansicht der Weichmetall-Ringdichtung 5 aus Figur 2. Es ist erkennbar, dass die Weichmetall- Ringdichtung 5 ist in drei Bereiche aufgeteilt ist:

### 1. Festgewalzter Bereich:

Dieser radial äußere Kraftschlussbereich 7 dient zur Stabilisierung der Weichmetall-Ringdichtung 5 und zum Vermeiden von Fließverhalten. Der Ursprung des Weichmetallwerkstoffes, vorzugsweise mit einer maximalen Härte von 90HB, ist im radial äußeren Kraftschlussbereich 7 verdichtet worden. Dieses verdichtete Material sorgt dafür, dass sich die Weichmetall-Ringdichtung 5 unter Krafteinfluss nicht verformt. Der Bereich 1 gibt der Weichmetall-Ringdichtung 5 damit die notwendige Stabilität.

Es wird Weichmetall-Material von außen nach innen geschoben, also vom radial äußeren Kraftschlussbereich 7 in den angrenzenden, diesbezüglich radial inneren Dichtbereich 8. Dieses kann durch ein Spezial-Werkzeug erfolgen, welches durch kreisrunde Rollbewegung das Material verdichtet und vor sich herschiebt. Durch das Verdichten und das Aufschieben erhält das Material im Dichtbereich 8 eine Erhöhung, durch die Stege 11a, 11b, 11c ausgebildet werden.

Der radial äußere Kraftschlussbereich 7 und der radial innere Kraftschlussbereich 12 haben durch die Verdichtung eine gegenüber dem Rohmaterial der Scheibe reduzierten Dicke / Höhe H₁.

### 2. Weiches Material, welches zur metallischen Abdichtung dient:

Diese Stellen im radial inneren Dichtbereich 8 haben eine geringere Härte als der verdichtete radial äußere Kraftschlussbereich 7 und der verdichtete radial innere Kraftschlussbereich 12. Die Härte ist die Härte, welche das eingesetzte Rohmaterial als Materialeigenschaft aufweist, vorzugsweise eine maximale Härte von 90 HB. Dieser Dichtbereich 8 wird nicht "fest gewalzt" bzw. verdichtet.

Der Dichtbereich 8 ist höher als der Kraftschlussbereich 7, 12, wodurch die Kraft der Flanschverbindung nur auf den Dichtbereich 8 drückt. Das weiche Material im Dichtbereich 8 dient somit als Abdichtung und wird durch die Anschlussflansche 2a, 2b verpresst.

Der Dichtungsbereich 8 hat eine relativ zu den Kraftschlussbereichen 7, 12 größere Dicke / Höhe H₂. Die Dicke / Höhe H₂ des Dichtungsbereichs 8 ist durch die Höhe der Stege 111a, 11b, 11c bestimmt und ist größer als die Dicke / Höhe H₁.

### 3: Material-Aufschub:

Bei dem Zwischenraum 10a, 10b, der zwischen den Stegen 11a, 11b, 11c des Dichtbereichs 8 liegt, wird das weiche Metallmaterial bspw. durch ein Spezial-Werkzeug jeweils zu den Stegen 11a, 11b, 11c aufgeschoben. Hierdurch erhöht sich der Dichtbereich 8 weiter, sodass Unebenheiten in den Flanschen ausgeglichen werden können.

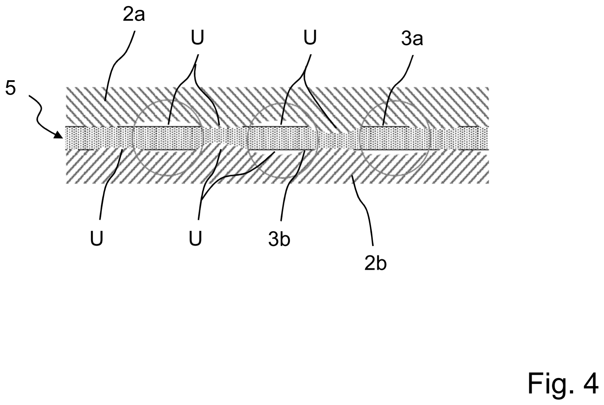

Figur 4 zeigt eine Skizze von Unebenheiten der mit zwischenliegender Weichmetall-Ringdichtung 5 aufeinander liegenden Flanschoberflächen, d.h. der Dichtflächen 3a, 3b.

Die Erhöhung des Dichtbereichs 8 durch die Stege 11a, 11b, 11c ist sehr wichtig, weil die genormten Flansche in der Oberfläche eine sehr hohe Toleranz haben. Der

Materialaufschub im Bereich des Dichtbereichs 8 durch die Stege 11a, 11b, 11c sollte mindestens 0,3mm höher sein als die Ebene der Kraftflussbereiche 7, 12, damit alle Unebenheiten U der Flansche ausgeglichen werden können und die Kraft aus den Anschlussflanschen 2a, 2b auch im Dichtbereich 8 anliegt und diesen optimal verpresst.

### Bezugszeichenliste

- 1: Flanschverbindung
- 2a, 2b: Anschlussflanschen
- 3a, 3b: Dichtflächen
- 4: Bolzenverbindung
- 4a: Bolzen
- 4b: Mutter
- 5: Weichmetall-Ringdichtung
- 6: Ausnehmung
- 7: radial äußerer Kraftschlussbereich
- 8: radial innerer Dichtungsbereich
- 9a, 9b: Anschlussbereiche
- 10a, 10b: Zwischenraum
- 11a, 11b, 11c: Stege
- 12: radial innerer Kraftschlussbereich
- H₁: Dicke / Höhe der Kraftschlussbereiche
- H₂: Dicke / Höhe des Dichtungsbereichs

## Patentansprüche

1. Weichmetall-Ringdichtung (5) für Flanschverbindungen (1) mit einer aus einem metallischen Material gebildeten Ringscheibe, die eine zentrale Ausnehmung (6) hat, **dadurch gekennzeichnet, dass** ein radial äußerer Kraftschlussbereich (7) der Ringscheibe verdichtet ist und ein diesbezüglich radial weiter innen liegender Dichtbereich (8) der Ringscheibe mindestens einen über den Umfang verlaufenden Steg (11a, 11b, 11c) mit einer geringeren Härte als der verdichtete Kraftschlussbereich (7, 12) aufweist.

2. Weichmetall-Ringdichtung (5) nach Anspruch 1, **dadurch gekennzeichnet, dass** ein radial innerer Kraftschlussbereich (12) der Ringscheibe im Vergleich zum Dichtbereich (8) verdichtet ist, wobei der Dichtbereich (8) der Ringscheibe zwischen dem radial äußeren Kraftschlussbereich (7) und dem radial inneren Kraftschlussbereich (12) der Ringscheibe angeordnet ist.

3. Weichmetall-Ringdichtung (5) nach Anspruch 1 oder 2, **dadurch gekennzeichnet, dass** mehrere radial voneinander beabstandete Stege (11a, 11b, 11c) im Dichtbereich (8) angeordnet sind.

4. Weichmetall-Ringdichtung (5) nach Anspruch 3, **dadurch gekennzeichnet, dass** ein Zwischenraum (10a, 10b) zwischen den voneinander beabstandeten Stegen (11a, 11b, 11c) vorhanden ist.

5. Weichmetall-Ringdichtung (5) nach Anspruch 4, **dadurch gekennzeichnet, dass** ein erster, radial weiter außen liegender Zwischenraum (10a) zwischen voneinander beabstandeten Stegen (11a, 11b) kleiner als ein zweiter, radial weiter innen liegender Zwischenraum (10b) zwischen voneinander beabstandeten Stegen (11b, 11c) ist.

6. Weichmetall-Ringdichtung (5) nach einem der Ansprüche 4 bis 5, **dadurch gekennzeichnet, dass** die Stege (11a, 11b, 11c) des Dichtbereichs (8) durch Materialaufschub aus dem Zwischenraum (10a, 10b) zwischen den Stegen (11a, 11b, 11c) gebildet sind.

7. Weichmetall-Ringdichtung (5) nach einem der vorhergehenden Ansprüche, **dadurch gekennzeichnet, dass** der mindestens eine Steg (11a, 11b, 11c) des Dichtbereiches (8) aus Weichmaterial der Ringdichtung (5) aus dem Kraftschlussbereich (7, 12) mit gebildet ist, wobei bei der Verdichtung des Kraftschlussbereiches (7, 12) ein Materialaufschub des Weichmaterials im Dichtbereich (8) bewirkt wird.

8. Weichmetall-Ringdichtung (5) nach einem der vorhergehenden Ansprüche, **dadurch gekennzeichnet, dass** der mindestens eine Steg (11a, 11b, 11c) des Dichtbereichs (8) gegenüber der Ebene des verdichteten Kraftschlussbereichs (7, 12) abragt.

9. Weichmetall-Ringdichtung (5) nach einem der vorhergehenden Ansprüche, **dadurch gekennzeichnet, dass** beidseits der Ringdichtung (5) jeweils mindestens ein über den Umfang verlaufender Steg (11a, 11b, 11c) eines jeweiligen Dichtbereichs (8) von der Ebene des Kraftschlussbereiches (7, 12) abragt.

10. Weichmetall-Ringdichtung (5) nach einem der vorhergehenden Ansprüche, **dadurch gekennzeichnet, dass** die Stege (11a, 11b, 11c) des Dichtbereiches (8) eine maximale Härte von 90 HB aufweisen und der Kraftschlussbereich (7, 12) eine größere Härte von mehr als 90 HB hat.

11. Flanschverbindung (1) zur Verbindung von zwei aneinander angrenzenden Rohren, die an ihren Rohrenden jeweils mit einem Anschlussflansch (2a, 2b) verbindbar sind, **dadurch gekennzeichnet, dass** zwischen den planparallel aneinander angrenzenden Anschlussflanschen (2a, 2b) eine Weichmetall-Ringdichtung (5) nach einem der vorhergehenden Ansprüche angeordnet ist und die Anschlussflansche (2a, 2b) miteinander verschraubbar und die zwischen den Anschlussflanschen (2a, 2b) liegende Weichmetall-Ringdichtung (5) dabei im Krafthauptschluss verpressbar ist.
